# EUROPEAN PATENT APPLICATION

(11) **EP 2 869 254 A1**
(43) Date of publication of application: **06.05.2015**
(21) Application number: 13191441.8
(22) Date of filing: 04.11.2013
(51) Int. Cl.: G06Q 20/32, G06Q 20/38, G06Q 20/20

(54) **Method of approving a transaction**

(71) Applicant: Vitisco nv, 9000 Gent (BE)
(72) Inventor: Beelen, Ronald, 3500 Hasselt (BE); Verborg, Giovanni, 8710 Wielsbeke (BE); Maris, Johan, 3600 Genk (BE); Talboys, Dean, Alcaucin 29713 Malaga (ES)
(74) Representative: BiiP cvba

(57) **Abstract**

The present invention is directed to a method for approving a transaction comprising: inputting a user-name and a password corresponding to a user account, generating a random key, generating a secure key, characterized in that the step of generating the secure key is based on the password and the random key.

The present invention is further directed to a system for approving a transaction comprising: means for inputting a user-name and a password corresponding to a user account, means for generating a random key, means for generating a secure key, characterized in that said means generating the secure key further comprises means for combining the password and the random key.

## Description

### FIELD OF THE INVENTION

The present invention relates to a method of approving a transaction comprising: inputting a user-name and a password corresponding to a user account, generating a random key and generating a secure key.

### BACKGROUND OF THE INVENTION

Security in transactions is a very much discussed topic today. Even if we talk about exchanging information or financial transaction, fraud is a common fear among people all over the world. Documents like US20120185398 or WO2013089591 discuss different ways of sending or sharing personal information on different electronic mediums. However none of them eliminate the risk of such personal information to be intercepted and further used in new transactions.

Further, some of the embodiments of the mentioned documents introduce different methods, physical or electronic devices to be used in different locations in conjunction with personal information, which would constitute a burden for a user wanting to access multiple locations.

Taking the above drawbacks into consideration it is an object of the present invention to provide a method for approving a transaction that minimizes the risk of personal data to be intercepted and used by an external party and eliminates the possibility of such personal data to be used in a new transaction of which the owner is not aware.

It is another object of the present invention to provide a method for approving a transaction that is much simpler to use and that requires less input from the user.

It is another object of the present invention to provide a method of approving a transaction that would be implemented in different locations or different domains without the need of an additional physical or electronic device to be used by the user.

It is another object of the present invention to provide a method of approving a transaction that would be easily implemented at the location of the service provider without the need of additional electronic devices.

It is a further object of the present invention to provide a method of approving a transaction that would be usable in different geographical locations without additional measures or limitations.

### SUMMARY OF THE INVENTION

The present invention addresses the above identified problems by providing a method for approving a transaction comprising: inputting a user-name and a password corresponding to a user account, generating a random key, generating a secure key, characterized in that the step of generating the secure key is based on the password and the random key.

The present invention is further directed to a system for approving a transaction comprising: means for inputting a user-name and a password corresponding to a user account, means for generating a random key, means for generating a secure key, characterized in that said means generating the secure key further comprises means for combining the password and the random key.

### BRIEF DESCRIPTION OF THE DRAWINGS

FIG 1 illustrates a process flow for a transaction request at the service provider according to an embodiment of the present invention
FIG 2 illustrates a transaction lifecycle according to an embodiment of the present invention
FIG 3 illustrates a process flow for a deferred payment according to a specific embodiment of the present invention
FIG 4 illustrates a metered transaction according to a specific embodiment of the present invention
FIG 5 illustrates a process flow for validating a transaction on request at the server according to an embodiment of the present invention
FIG 6 illustrates a process flow for validating a transaction on the mobile device according to a specific embodiment of the present invention

### DESCRIPTION OF THE INVENTION

In the context of the present invention, a transaction is understood as any kind of exchange of money, goods or information like for example: an acquisition of a good, retrieval of access to a file, retrieving the access in or out of a building, or any type of communication between electronic devices or between a human and an electronic device.

The present invention is directed towards a method for approving a transaction comprising: inputting a user-name and a password corresponding to a user account in an electronic device, said electronic device generating a random key and generating a secure key, characterized in that the step of generating the secure key is based on the password and the random key.

Indeed, by generating a secure key based on said password and said random key, personal information will not be directly and literally used in approving such a transaction, making the method according to the present invention much more secure. Even if an unauthorized person would intercept said secure key, he/she would not be in the possession of the user's password and therefore would not be able to approve a transaction of which the owner of the account is not aware.

For increasing even more the security of such a method said electronic device can check if said random key is a unique random key. In case such a check would not have a positive outcome, another random key is generated.

In a preferred embodiment according to the present invention, said random key is generated each time a user would want to approve a transaction, therefore the outcome of the method according to the present invention is different with every transaction request. By implementing such a method, the risk of unwanted use of an unauthorized person intercepting the secure key is eliminated.

In the context of the present invention said password and/or said random key are to be understood as a combination of characters like for example: a combination of letters, numbers, special symbols or a combination thereof.

Said random key can be of variable length, more preferably said random key is of a fixed length.

In another embodiment according to the present invention said method can further comprise an additional step in which said password is further protected by applying any cryptographic or encoding methods, like for example: symmetric-key cryptography (Data Encryption Standard (DES) and the Advanced Encryption Standard (AES), triple-DES, Cryptographic hash functions) public-key cryptography (Diffie-Hellman key exchange protocol, RSA algorithm, Cramer-Shoup cryptosystem, ElGamal encryption, elliptic curve techniques), Constant Bit Rate Encoding (CBR), Two-Pass Constant Bit Rate Encoding, Quality-Based Variable Bit Rate Encoding, Unconstrained Variable Bit Rate Encoding, Peak-Constrained Variable Bit Rate Encoding, or the like.

Preferably, a cyclic modulo n encryption method is used to protect said password. The result of said cryptographic or encoding method will be further referred to as the modifier code.

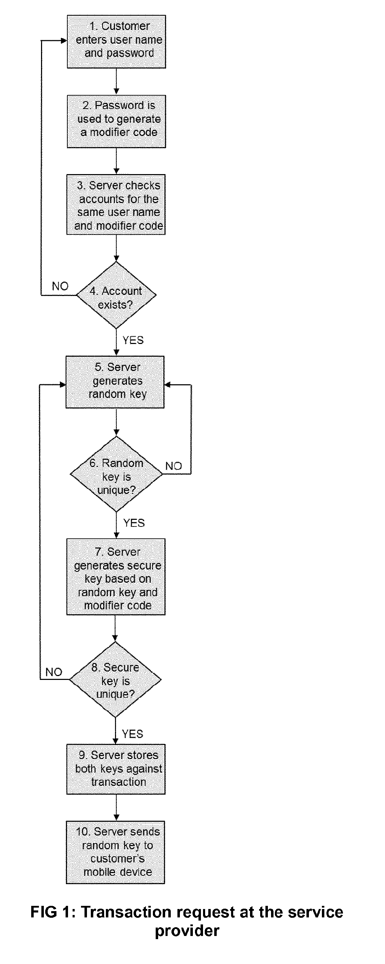

In another embodiment according to the present invention (FIG 1), said modifier code is further used in conjunction with the random key to generate the secure key.

Indeed, by applying a method for approving a transaction as described above, privacy and security requirements are not only met but also the risks of fraud or identity theft are eliminated.

In an embodiment according to the present invention, generating said secure key implies applying: a modulo n encryption method, or a intercalating function, or a consolidation function, or the like, to said modifier code and random key.

Further, the modifier code is generated by a first electronic device and sent over a network to a server for identifying the user account.

Further, said random key can be stored on the server and/or on the electronic device in a non-volatile memory like for example on a: read-only memory, flash memory, ferroelectric RAM (F-RAM), and the like. Moreover, said user-name, random key and modifier code are stored within for example transaction tables on said server and/or on the electronic device.

In the context of the present invention an electronic device is to be understood as a fixed or mobile electronic device.

A fixed electronic device is to be understood as any kind of device bounded by a continuous source of electricity like for example: a scanner, a desktop computer, a printer, a video camera, or the like.

A mobile device is to be understood as any kind of device not bounded by a continuous source of electricity like for example and not limiting to: mobile phone, tablet computer, personal digital assistant (PDA), laptop, music player, mp3 player, pager, portable scanner, video game console, electronic reader, slate computer, global positioning system receiver, camera, digital camera, video camera, digital video camera or the like.

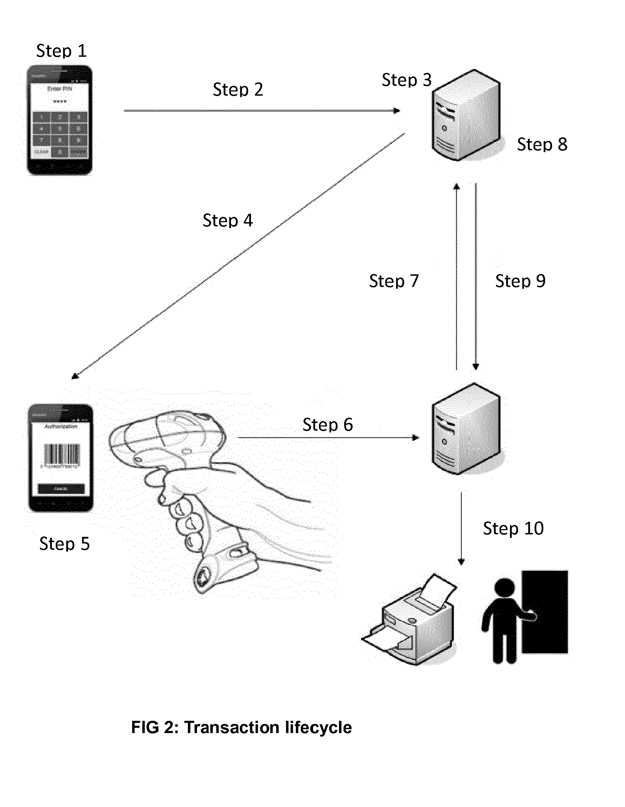

In a preferred embodiment according to the present invention, said first electronic device is a mobile electronic device (FIG 2). This feature increases the accessibility and ease of use of a method according to the present invention. It will further not restrict the user against a certain service provider or a geographical area like for example: a city, a region, a country or a continent. As long as said user is in the possession of his/hers mobile device and his/hers password he/she will be able to use a method according to the present invention to approve a transaction.

In the context of the present invention, a service provider is to be understood as a provider of any kind of service where a transaction as defined above can occur, such as for example: a shop, a website, a bank, a private location, a public location, an electronic platform.

For increasing the security and privacy measures even more, neither said password nor said modifier code are stored on the first electronic device. Said modifier code will exist only temporarily on the first electronic device as a variable and will be used to generate said secure key. Therefore in case said first electronic device is stolen or lost, an unauthorized person would not be able to approve a transaction. Said password is further not transferred over a network without being protected, therefore in case an unauthorized person would intercept the secure key he would not be able to approve another transaction, as he will not be in the possession of the random key, and/or the cryptographic or encoding method in order to recover the password. Furthermore, said random key is generated individually for every transaction, which makes the method of the present invention even more difficult to clone by an unauthorized person.

In a preferred embodiment according to the present invention, said user needs to authenticate himself by providing a user-name and a password. Said password is further protected through the generation of the modifier code, and said modifier code is further sent to the server together with the user-name. Preferably, said server generates a fixed length random key. Said random key can be a combination of characters, like for example: a combination of letters, numbers, special symbols or a combination thereof. The generated random key is further sent by the server to the first electronic device.

Further, said first electronic device and/or the server can generate the secure key by using the same method. Further, said secure key can be stored within said transaction table on said server.

After the server receives the secure key generated by said first electronic device, said server compares the secure key received from the electronic device against the transaction table stored on said server. If said comparison does not have a positive outcome, said server can request for a new secure key, more preferably said server can request said user to input his password again in said first electronic device through for example: a Popup message, an SMS, a message sent to the user account. If this step is repeated for more than 10 times, preferably more than 5 times, even more preferably for more than 2 times said server can block said account so no further transactions could be approved until specific authentication steps are being performed by said user.

This feature further ensures a very high level of security in the communication held between the first electronic device and said server, as no relevant personal data is stored on the first electronic device, especially due to the absence of a record of the password which is required by the server to override any encountered errors.

In a further embodiment according to the present invention, in case said server request the user to input his/her password it can also ask for an additional secure check which was previously stored on the server, like for example: a secure key, a secure question, a personal question, a card number, an issuer of a card, a CID code, a security password or the like.

In case such a check is not successful, said server can block the account and further communicate with the user though different registered means, like for example: by sending an SMS to a second phone number saved against said account, or by sending a voice message to said second phone number saved, or by sending an e-mail or the like.

In case such an account stores financial information and financial transaction, the server can further comprise means for communicating directly with the bank issuer and request for an account to be blocked until the owner can take appropriate actions.

In a preferred embodiment according to the present invention, said server stores said secure key and random key against said transaction.

In another embodiment according to the present invention, said server can generate a unique identifier against said transaction like for example a unique random number, or a sequential number comprising details on the date and hour of purchase, or a sequential number comprising details on the GPS location and date of purchase, or the like. Further said server can send said unique identifier to said user through an SMS, or a Popup message or an e-mail or the like. This feature would further allow the user to check and verify his account periodically and further extract reports if needed.

Further, the unique identifier can be stored in a different location on said server like for example within a transaction trail database. This feature will allow the user to extract transaction reports at any moment needed.

Preferably, said server may build a transaction table comprising information regarding time of approval and/or type of transaction and/or location and/or said random key and/or said secure key and/or said unique identification number.

In another embodiment according to the present invention, said server can build more than one transaction table.

Preferably, said random key and said secure key of a certain transaction are unique within said transaction table. Further, the random key and the secure key can be unique within all transaction tables built on said server. This feature will increase the level of security of a method according to the present invention by eliminating the risk of duplicate transactions.

In a further embodiment according to the present invention, said first electronic device can send said generated secure key and/or random key as an SMS, as an e-mail, through Bluetooth, Near Field Communication (NFC), Infrared (IR), preferably said first electronic device displays said secure key and/or said random key as an electronic readable image, like for example under the form of: a barcode, Quick Response (QR) code, a character string, SPARQCode, ShotCode, PDF417 (Portable Data File), MaxiCode, High Capacity Color Barcode, Data Matrix, Aztec Code or the like. Further, said user can select in which format of electronic readable image to display said secure key and/or said random key. Preferably said user can switch from one format to another when displaying said secure key and/or said random key.

Because said secure key and/or said random key are displayed as an electronic readable image, somebody being in the proximity of the user would not be able to see the characters of said secure key and/or said random key and would further not be able to use them in a new transaction.

In a further embodiment according to the present invention, said barcode can be of any format, like for example: linear barcodes or matrix barcodes or images, such as: Code 39, Code 39 Full ASCII, Code 39 HIBC, CodaBar, Code 93, Code 128, UCC/EAN 128 (Universal Product Code/ European Article Number), Interleaved 2 Of 5, PostNET (Postal Numeric Encoding Technique), UPC-A, UPC-E, EAN/JAN-8 (European Article Number/ Japanese Article Number), EAN/JAN-13, BookLand, MSI/Plessey (Modified Plessey), or the like.

In a further embodiment according to the present invention said server can create additional entries on each account by storing specific device information from said first electronic device like for example: network IP range used, phone number, International Mobile Equipment Identity (IMEI), Media Access Control (MAC) address, International mobile Subscriber Identity (IMSI), or the like.

In case a transaction request received by said server would not comprise at least one of the stored entries, said server could ask the user to input his password or said server could directly block the account until said user would take appropriate authentication steps. This feature eliminates the risk of another person to clone a transaction while being in the proximity of the user and send a request for approving a transaction from another unregistered/ unknown electronic device.

In a further embodiment according to the present invention said second electronic device is able to scan and/or read the displayed secure key and/or random key, send said secure key and/or random key and electronic device identity information of said second electronic device to said server.

In a further embodiment according to the present invention, if said random key is sent to the server and is not found by said server in the transaction table, said server will send a message to the electronic device at the second location. Further, the user can generate and display the secure key and the electronic device at a second location can send it to the server. The server checks if said secure key is found in said transaction table. In case such a check does not have a positive outcome, the server can send a message to said second electronic device and said user can enter again the password on his electronic device and try again.

Because said electronic device at a second location does not receive any identity information from the first electronic device, the level of security of a system as per the present invention is very high. Even if an unknown person would intercept the communication between the first electronic device and the second electronic device, the identity of said user and/or the first electronic device are not known.

In a further embodiment according to the present invention, said first electronic device can display identification data, like for example: the username and/or phone number and/or International Mobile Equipment Identity (IMEI) and/or Media Access Control (MAC) address and/or International mobile Subscriber Identity (IMSI). The second electronic device can further send the identity information together with said random key and/or said secure key to the server. Further, the server can identify said user through said data and inform him/her directly on his/her electronic device in case said random and/or secure key are not found within said transaction table. This feature will help said user to be informed at all times about approval requests sent on his/her user account.

Because said random key and/or said secure key are displayed as an electronic readable image, no additional electronic devices would be needed at the service provider. In case said random key and/or said secure key are displayed as a barcode, only a one dimensional (1 D) barcode scanner is needed, device commonly found in most if not all of the locations of the service providers.

In a further embodiment according to the present invention, said second electronic device is a POS system comprising reading said electronic readable image. By implementing a method according to the present invention, said secure key is not being decrypted or decoded at any time. Therefore the password is not being used or displayed in its initial characters by any device. The POS system is able to read said electronic readable image and send it to the server for further checks.

Even if a person would intercept said secure key, he/she would not be able to retrieve the password without having the cryptographic method and/or encoding algorithm. Because of the cryptographic methods and/or encoding algorithms used, he/she will further not be able to determine the length of the password. By not being able to retrieve said password, the person intercepting said secure key would not be able to apply the method according to the present invention for a new transaction of which the owner is not aware.

In another embodiment according to the present invention, if the user considers that said password or said cryptographic method and/or encoding algorithm have been intercepted, said user can choose to change one or all. Further, said user can request the server to create another random key.

In another embodiment according to the present invention, if said server receives a transaction request that does not meet all the requirements, it can ask the user to change said password and/or said cryptographic method or encoding algorithm upon the next transaction request.

In a preferred embodiment according to the present invention, said POS system is recognized by said server because of an electronic device identity. Further, if a POS system is accessing said server for the first time, a fixed or mobile electronic device in the premises of the service provider is used. Said fixed or mobile electronic device further comprises means for sending GPS coordinates to said server. Said server will further generate an identity code and will further check if said code is unique within the server database. In case the outcome of said check is negative, said server will generate another identity code and a further check will be performed. In case the outcome of said check is positive, said server will store said identity code against said POS system and will further send said identity code to said fixed or mobile second electronic device.

Said fixed or mobile second electronic device will display said code as a machine readable image. Further, said POS system comprises means for reading said electronic readable image and further stores said identity code permanently in its memory.

In a further embodiment according to the present invention, said server validates the identity of the first electronic device based on said user-name and said modifier code.

In another embodiment according to the present invention, said password can be not unique. This feature will not limit the possibilities of a user to define his protection and will further not provide any guide of a password of another existing account, maintaining privacy and security measures. However, said server will check if said user-name is unique against registered user-names.

In another embodiment according to the present invention, said user can have more than one first electronic device. Furthermore, said user can send a transaction request from more than one first electronic devices.

For an increased security, said server can save one of said cryptographic methods or encoding algorithms against each of the first electronic devices. It can further store said modifier code and user name against each of the first electronic devices. Therefore, the same user requesting the approval of a transaction can use different electronic devices and will have different generated secure keys depending on which device he uses. This feature makes the method according to the present invention safe to use in multiple locations. Moreover, said user is not bound by carrying the same electronic device with him.

Furthermore, said user can have multiple accounts set-up on the same first electronic device. Said accounts can further have different user-names, and/or different restrictions, and/or different/same passwords, and/or different/same cryptographic or encoding method, or a combination thereof.

In a further embodiment according to the present invention said electronic device can communicate with said server through a wired or wireless internet network, or though Bluetooth, or through Near Field Communication (NFC), or Radio Frequency (RF) or through Infrared (IR) and can send information regarding the geographic position of said electronic device by sending for example GPS coordinates.

In a further embodiment according to the present invention, said method can comprise restrictions based on, for example: geographic location (GPS position), day of the week, time of day, service provider, number of requests to approve a transaction, amount limit for a transaction or amount limit within an hour, or amount limit within a day, or the like.

Further, a method according to the present invention can approve a transaction based on said random key and said restrictions. A user would only need to send the request to the server, said server will generate said random key and will send it to the first electronic device. Said first electronic device can further display the random key as an electronic readable image.

Further, said restrictions can be saved on the server and/or said restrictions can be stored on the first electronic device. Moreover, said restrictions can differ on each first electronic device of the user.

In case the customer would send an approval request by using said random key that would not comply with the stored restrictions, said server could block the account, or more preferably said server could ask said user to input his password on said first electronic device. In case said password is inputted on the electronic device, said first electronic device would generate the secure key in the same manner as the server.

Further said user can choose if said restrictions would be applied on his/her first electronic device and he/she can further choose if said restrictions can be overwritten or not by inputting said password or secure key.

In case said user would send an approval request, said first electronic device is able to check if said restrictions are met. If all said restrictions are met, said electronic device can display said random key as an electronic readable image to the second electronic device which will further send it to said server. In case said restrictions are not met, and said user decided that these restrictions can be overwritten by said password or said secure key, said user will be asked to input the password and then the first electronic device would either display the random key as an electronic readable image or further generate said secure key and display it as an electronic readable image which will be further sent to said server. Furthermore, the server is able to identify if the received key and/or code is generated based on the input of said password or not by checking said transaction table and in case needed, said server can ask the user to input said password by sending a message to the second electronic device or directly to the first electronic device.

Further, if said electronic readable image is in the form of a QR (Quick Response) code, said restrictions can be further stored and directly retrieved by reading said QR code.

This feature would make the method according to the present invention very fast to use for commonly known transactions, and can generate different levels of security on different electronic devices or can generate different levels of security on different accounts connected to the same electronic device.

In case said user considers that his account is not safe anymore, or in case of theft of said electronic device, the user can manually block said account, or said user can manually change said restrictions by accessing his/ her account from another electronic device.

In a further embodiment according to the present invention said transaction request can be valid for at least 5 minutes, preferably for at least 3 minutes, or more preferably for at least 1 minute. In case said server does not receive the correct data within this time interval, said transaction will be blocked, more preferably said transaction will expire and said server can further mark it accordingly within a transaction table as for example marked for deletion.

In another embodiment according to the present invention, said server validates the identity of the second electronic device based on said device identity information. This is an additional security step which the server performs before approving the transaction. Further, said device identity information can be unique within the server database, or can be unique within a certain geographical location. Said identity information can be any combination of characters or symbols and will be further referred to as the ID code.

In a further embodiment according to the present invention, said second electronic device can request a unique ID code upon registering within the service provider's network, or said second electronic device can comprise a chip with an already generated unique ID which will be further recognized by said server.

If said ID code of said second electronic device is not recognized, but the received random key or secure key are found by the server in the transaction table, the server can request the user to input his/her password, and/or said transaction can be denied, and/or the user can be announced through SMS, e-mail or additional contact information saved against his/her user account. If more than 10 attempts, preferably more than 5 attempts, more preferably more than 3 attempts are being received from the same second electronic device or from unrecognized electronic devices at a second location, said server can block said account until the user can take appropriate steps.

In a further embodiment according to the present invention, in case the ID code of the second electronic device is not recognized by said server, then the server can send a message to said second electronic device and inform of the need of initialization. Said second electronic device can send a request for an ID code to the server by using an additional fixed or mobile electronic device as explained above.

Further, said second electronic device can also send information about said service provider when requesting initialization, like for example: location information and/or name and/or license. Upon receiving the request, the server will check the identity of said service provider and allocate a unique ID code for said second electronic device. After said second electronic device receives said ID code, the transaction approval can be sent again.

In another embodiment according to the present invention, in case the server receives identity information from an unknown second electronic device, said first electronic device can send said ID code of said second electronic device together with said username and secure key to the server upon requesting a transaction approval. The server can further save said ID code of said second electronic device together with a reference to said service provider and further generate and send said random key to said first electronic device. The first electronic device can generate the secure key based on said received random key and modifier code and display it as an electronic readable image. The second electronic device can read the electronic readable image and further send it to said server together with said ID code. The server will check if said ID code and said secure key are found within the transaction table and further approve said transaction or request for further information.

In a further embodiment according to the present invention, said transaction can be a financial transaction. Furthermore, said password can be a PIN code. This feature will make the method easier to use and associate with existing bank cards. Moreover, the user can connect different bank cards to different electronic devices for a better financial control.

In a further embodiment according to the present invention, said method can be used in online payment applications without having the risk of fraud, as no customer information is being directly sent.

In a further step of a method according to the present invention, after the server checks the validity of said first electronic device, it will also check the validity of the second electronic device and checks if said secure key is the correct one. The server will further send information on validity of transaction to said second electronic device, and said second electronic device confirms or rejects said transaction.

Further, for reducing hardware requirements of storing data, said transactions can be visible on said server for a predetermined period of time. Preferably all transactions can have the same time interval in which they are kept like for example: a week, a month, or three months. More preferably, said user can define said time interval in which said transactions are visible on said server. After said time interval said transactions can be deleted by said server or further stored on an additional database in another location.

In case such a transaction is being deleted from the transaction table, said random key and/or said modifier code can be further used for new transactions.

Further, even if said random key and/or modifier code are deleted from the transaction table, said user can further see the transactions in the transaction trail database as explained above.

In the context of the present invention FIG 2 represents a specific example of an embodiment wherein in:
Step 1 said user inputs his/her username and PIN on said mobile device, and said mobile device further calculates said modifier code by using said PIN
Step 2 said mobile device sends said username and modifier code to said server
Step 3 said server validates said mobile device identity and generates said random key and secure key by using said modifier code
Step 4 said server sends said random key to said mobile device
Step 5 said mobile device uses said modifier code to generate said secure key from said random key and displays said secure key as an electronic readable image
Step 6 said electronic readable image is scanned and read to be used by the second electronic device at the service provider
Step 7 said second electronic device at the service provider sends said ID code and secure key to said server
Step 8 said server checks the validity of the ID code and of the secure key
Step 9 said server sends a positive or negative response to said second electronic device at said service provider
Step 10 said second electronic device at said service provider confirms or rejects said transaction request.

The present invention is further directed towards a system for approving a transaction comprising: means for inputting a user-name and a password corresponding to a user account, means for generating a random key, means for generating a secure key, characterized in that said means for generating the secure key further comprises means for combining the password and the random key.

In another embodiment according to the present invention said system can further comprise means for further protecting said password by applying any cryptographic or encoding method, like for example: symmetric-key cryptography (Data Encryption Standard (DES) and the Advanced Encryption Standard (AES), triple-DES, Cryptographic hash functions) public-key cryptography (Diffie-Hellman key exchange protocol, RSA algorithm, Cramer-Shoup cryptosystem, ElGamal encryption, elliptic curve techniques).

Preferably, a cyclic modulo n encryption method is used to protect said password. The result of said cryptographic method or encoding algorithm will be further referred to as the modifier code.

In another embodiment according to the present invention, said modifier code is further used in conjunction with the random key to generate the secure key.

Indeed, by applying a method for approving a transaction as described above, privacy and security requirements are not only met but also the risks of fraud or identity theft are eliminated, as said password is not being sent over the network unprotected.

Further, the modifier code is generated by a first electronic device and sent over a network to a server.

In a further embodiment according to the present invention, the system is not storing said password on said first electronic device. This feature makes the system according to the present invention even more secure. It will further confer privacy for user related information as said password is not sent to a second location in its original form. Moreover, due to the cryptographic or encoding method applied on said password, an unauthorized person intercepting said modifier code will not be able to retrieve said password, as he/she will not be in the possession of the random key and/or of the cryptographic or encoding method applied.

Furthermore, because of the cryptographic or encoding method applied, an unauthorized person intercepting said modifier code will not know and will not be able to find out the length of said password.

For a better protection of data, said password is understood as a combination of characters like for example: a combination of letters, numbers, special symbols or a combination thereof.

Further, said first electronic device and/or said server comprise means for generating said secure key by using the same method.

A system according to the present invention can be implemented for approving financial transactions and/or accessing a physical location and/or accessing an electronic platform and/or accessing a virtual platforms and the like.

### Example of generating a modifier code from a password:

A user wanting to use a method according to the present invention accesses a designated webpage and creates an account by inputting a username and a password. Said server further checks if said username is unique. In case the outcome of said check is not positive, said user will be asked to choose another username. In case the outcome of said check is positive, the user will receive a message confirming the creation of said account. Said user further downloads and installs an application using a method according to the present invention on his/her mobile device.

Further, said user accesses his/her account on said mobile device by inputting his/her username and password.

Upon installation of an application according to the present invention, said mobile device generates one or more random number sequences. Said sequences can also be further created upon user request.

Furthermore, said random number sequences can be generated by using a randomizing function as part of said application, or said sequences can be extracted from a file or media installed on the application, or said sequences can be data used to define at least a picture in a gallery, which said user chooses.

Said random number sequences are at least 10 random number sequences, and are generated to correspond to the numbers 0 to 9. As said password can be a combination of characters and symbols, more sequences can be created and assigned to additional characters and symbols used within said password.

Further, each character or symbol within sad password will be associated with a numerical value. The numerical value can be further used to reference the corresponding random number sequence.

Said mobile device uses a modulo n encryption method to generate said modifier code based on said password. The input for said modulo n encryption method is comprised of the associated random number sequence as defined above.

Furthermore, the first and second sequences referenced in this way can be further used as input to the modulo n encryption method and the result of such an operation used as subsequent input to the routine along with the third random number sequence referenced. The outcome of said operation will be used as input together with the fourth sequence referenced and so on until said password is completely processed.

The result of said modulo n encryption method is referenced as the modifier code.

Said mobile device will further generate said modifier code and send it together with said username to the server through a secure connection over the internet. Further said server will associate said mobile electronic device with said account based on said modifier code.

The modifier code can further be used by the user to access his/her account from a specific first electronic device and also it can be further user to generate the secure key for approving a transaction.

In case said user would want to access said account from another electronic device he/she would repeat the steps as explained above using the same username and password, and said server will generate another modifier code that will be further associated with said other electronic device.

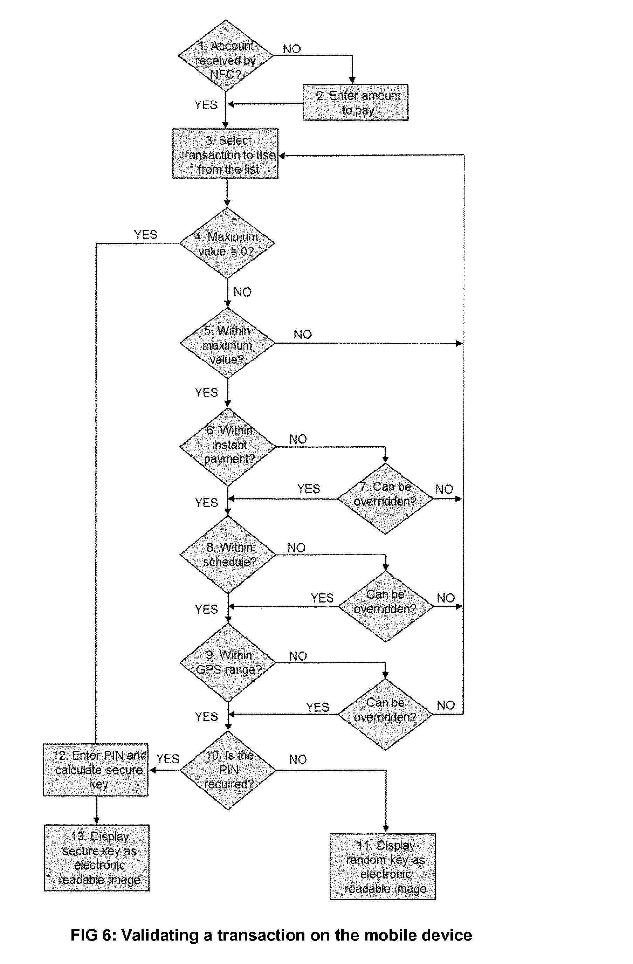

### Example of associating a mobile device with the account (FIG 6)

The user downloads, installs an application according to the present invention on his/her mobile device and creates an account through a secure connection, like for example by using a secure browser over an internet connection.

Said user will have to enter a password and a unique username for verification.

The first time the user will access the account using his/her mobile device, said server will associate said mobile device against the account by using said username and modifier code.

In case said user would want to register another electronic device against said account he/she would only need to repeat the steps as defined above. In case more than one electronic device is registered against said account, said user can use the same password or said user can use different passwords for each mobile devices. This feature makes the account according to the present invention usable by multiple users or by the same user accessing said account from different locations or having multiple electronic devices.

If said user would lose his/her mobile device, said account can be accessed through said secure connection from another electronic device and appropriate measures can be taken, like for example: a change of username and/or password, a change of restrictions relative to said mobile device, or blocking said account.

### Example of an online transaction request

In another embodiment according to the present invention said transaction can be a web based transaction. In such a case, said user will log-in by using his/her username and password on his/her mobile device and open a webpage wherein a transaction approval is needed in order to finalize either a specific step or a purchase. The user will further select the option of online payment from his/her mobile device. The website application will further communicate with said server and request permission to create said transaction.

Said server will check if said account is valid and in case of a positive outcome said server can further check if said web page used by said user is found within said transaction table or if said web page is a registered one in said server database or if said page is a safe page. In case such a check has a positive outcome, said server can further generate a unique identity code like for example a session ID, store it in said transaction table and send it further to said website application.

In another embodiment according to the present invention, said session ID can be automatically generated by said server and sent over to the mobile device once said user selected the option of online payment.

Further, said session ID is only valid for a certain period of time, like for example: it can be valid for a certain number of minutes, or said session ID can be valid until said transaction is completed. Afterwards said server will further delete said session ID from said transaction table.

Further, said mobile device will send said secure key and said username to said server for approving the transaction and can further send said session ID to the server, or said session ID can be sent to the server by the website. In case said server finds said secure key and session ID within said transaction table, said transaction is approved. In case such a check has a negative outcome, said server can block said account or can notify said user on the display or via SMS or e-mail, or said server can ask said user to try again.

In a further embodiment according to the present invention, said user can choose to approve an online transaction by using only his/her mobile device by opening said webpage in a browser on said mobile device.

In case said user will use his/her mobile device and an additional electronic device, such as a personal computer, for approving a transaction, then said personal computer can further comprise means for scanning (like for example by comprising a webcam able to scan the electronic readable image displayed by the mobile device) or means for retrieving via NFC (Near Field Communication) said secure key generated by said mobile device and further send it to said server.

### Example of a deferred payment

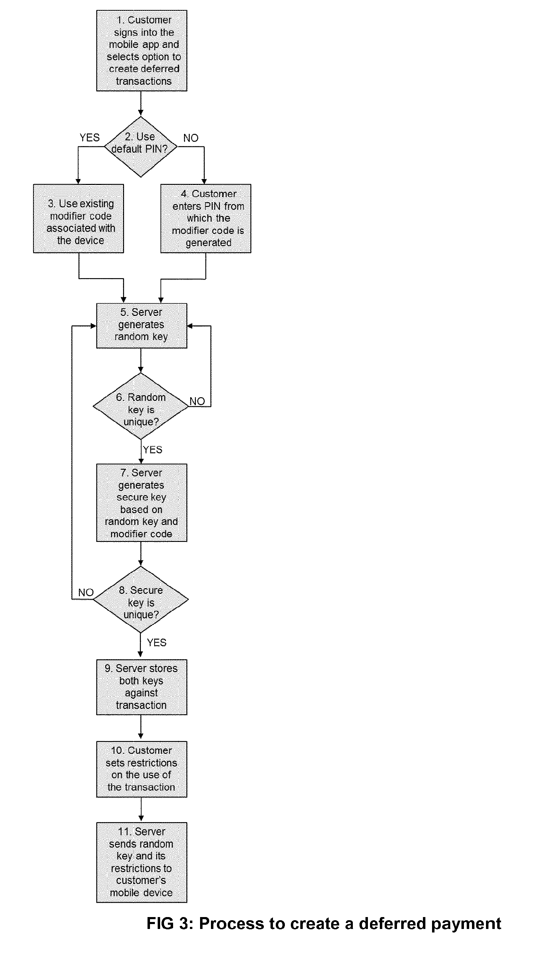

A user logs into the application on his/her mobile device (FIG 3) by using his/her user-name and password. Said server verifies if said username and password are saved against an account on said server and in case such a check has a positive outcome said server further connects to the associated account. In case such a check does not have a positive outcome said server will ask said user to try again.

Said user can then create different restriction levels and/or different restriction rules against said account, like for example: different users or electronic devices associated with the account, or different values associated with the transaction in case of a financial transaction, or allowed geographical radius for said mobile device, or different geographical locations for said service provider, or different service provider IDs, or different moments of the day, or different days of the week, or different number of transaction requests within a day, or different numbers of transaction requests associated with a specific restriction.

Further, said mobile device can further send said restrictions to said server and said server and/or said mobile device can further store said restrictions in a non-volatile memory.

Further, for increased security, said different restrictions can have different passwords. If said user requests an approval of a transaction having one or more of the above restrictions, said user will have to access the application on his/her mobile device and select the option for a deferred transaction.

The user would then be able to create a new password for said transaction or use the account password. In case the user uses the account password, the mobile device will generate said modifier code and said secure key. In case said user decides to use a new password, the mobile device uses the new password to generate a new modifier code and send it to the server.

Further, the server generates a random key and checks if said random key is unique. In case said check does not have a positive outcome, the server will generate a new key and repeat the check until a positive outcome will occur.

Further, said server generates the secure key based on said random key and modifier code and checks if said secure key is unique within said transaction table. In case said check does not have a positive outcome, said server will generate a new random key and repeat the steps as described until the random key and secure key are unique within said transaction table.

Further, said server will store said random key and secure key against said transaction and can send said random key and said restrictions to said mobile device. For increasing security measures, said server can further start a time counter like for example a 60 second time frame in which said transaction can be approved. If said time frame is not met, said transaction can be marked for deletion.

Further, in case said user chooses to, after the server sends the random key to the mobile device, said mobile device can stop the internet connectivity or any other communication means with said server. Said mobile device will use the random key to generate the secure key and further display it as a machine readable image to the POS of said service provider. This feature makes the system as per the present invention to be very easy and cost effective to implement on every device, without having additional requirements, and without requiring the mobile to connect to a communications network for approval of a transaction.

When said user would want to send a transaction approval request to said server, said mobile device will check if said transaction meets said restrictions. In case such a check has a positive outcome, said mobile device will send said random key that is stored against said transaction to said server. In case such a check does not have a positive outcome, said server will ask said user to input said account password, or said server will ask said user to input said password associated with said restriction, or said server will ask said user to input said secure key. Said server can ask said user to input said account password, or associated restriction password, or said secure key on said mobile device, or at said POS of said service provider.

For increased security, said user can select specific restrictions for which a password request can be accepted. For other specific restrictions, if said check does not have a positive outcome, said server can mark said transaction as marked for deletion.

Further, for increased security, said user can define a restriction for a maximum amount that can be approved through said transaction, even if said password is used.

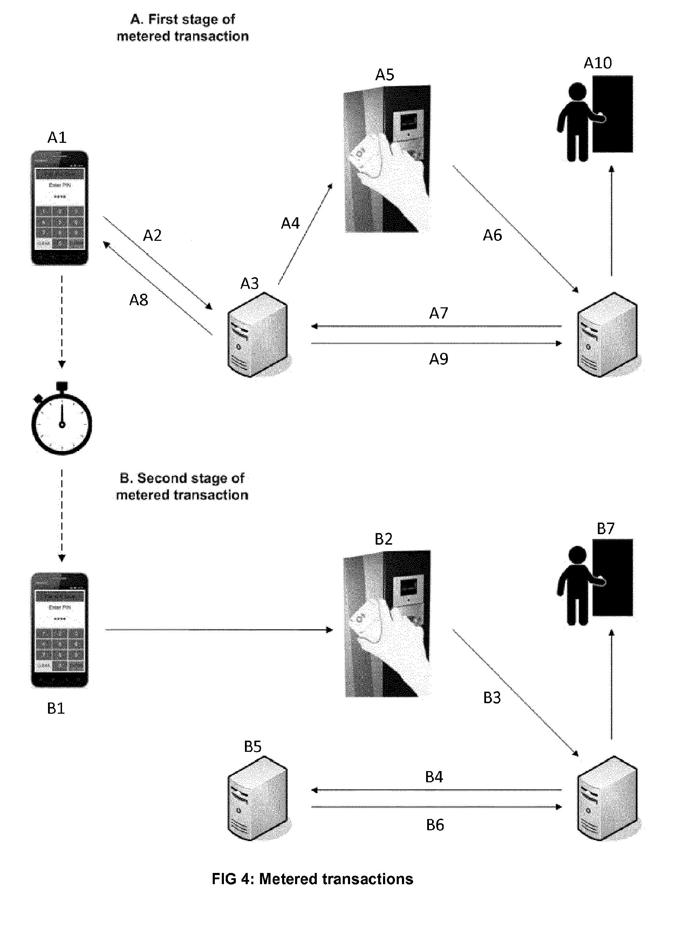

### Example of a metered transaction (FIG 4)

A user being at the premises of a service provider uses an electronic device to access his account by inputting his username and modifier code. Said server checks if said account exists based on said username and modifier code. If said check has a positive outcome, said server generates said random key and sends it to said electronic device.

Said electronic device further generates a secure key based on said random key and modifier code and displays it as an electronic readable image like for example in a Code 39 format. Said service provider has a POS system at his premises that is capable to read said Code 39 format and retrieve said secure key which is further sent together with said POS ID code back to the server. The server will check the identity of said POS in its database and if said secure key is the same as the one generated by said server.

Said server further comprises a database with registered POS ID codes and can further store calculation details if defined by said POS systems, like for example: costs calculation rules according to: registered time, geographical position, registered service, or the like.

If said POS ID is not found in the database of said server, said transaction is refused and said user notified on the display or printout of said POS system, or via SMS or e-mail.

If the secure key is not the same as the one generated by said server, said server will send a message back to the POS system and ask for a new code.

If the secure key is the same as the one generated by said server, said server will open a transaction on said account and will open a timer. Said server will consider said transaction open and pending.

Said server generates a second random key which will be used in conjunction with the user's modifier code to generate a second secure key.

Said server will store said second random key, second modifier code and additional parameters against said open transaction and said server will further send said second random key to said user's electronic device. Further, said server can remove the first secure key, first modifier code and first random key from the transaction table or further store them in another location on said server.

In case needed, the user will be further able to change his/her password even after said second random key has been sent to his/her electronic device.

When the user will want to complete said transaction, he/she will login on said electronic device and will choose said open transaction from the list of transactions visible on his/her account. Preferably, said transaction cannot be deleted from the list. Said user will need to select it and complete it.

The second random key associated with the transaction will be retrieved by said electronic device. Said electronic device will further generate the second secure key by using said retrieved second random key.

Said electronic device will display said second secure key as an electronic readable image at the POS of said service provider. The POS comprises means for reading said electronic readable image and retrieve the second secure key which is further sent together with the POS ID code to the server. The server will further validate the POS ID code and stop the counter of said transaction.

Further, said server calculates the value of said transaction based on saved rules retrieved for said POS system and will check the account details of said user. If after said check said amount can be covered by the user's account, the value of said transaction is blocked on the account and the server will send a message to the POS system of approved transaction. If after said check the amount cannot be covered by the user's account, the server will send a message to the POS system of denied transaction.

Depending on the service provider, a request for a minimum amount on the user's account can be requested. Further, said user can block a certain amount on his/her account after creating it to facilitate such transactions and restrictions. The server can further check if said amount is in accordance with such restrictions of the service provider and further send a message to said user and/or said service provider. In case such restrictions are not met by checking the blocked amount, the server can block the needed amount from the user's account.

FIG 4 is a specific example of the above embodiment according to the present invention wherein:
A1 represents the step in which the user inputs the username and the PIN on his/her mobile device, and said mobile device further calculates the modifier code from the PIN
A2 represents the step in which said mobile device sends the username and modifier code to the server
A3 represents the step in which the server validates the mobile device identity and generates the random key and the secure key based on said modifier code
A4 represents the step in which said server sends said modifier code to said mobile device
A5 represents the step in which said mobile device uses said modifier code to generate said secure key by using said random key and further displays the secure key as an electronic readable image
A6 represents the step in which said electronic readable image is scanned and read to be used by the POS at the service provider
A7 represents the step in which said POS at the service provider sends the ID code and said secure key to said server
A8 represents the step in which said server validates said ID code and said secure key, creates a new transaction on said server and sends said transaction details to said mobile device
A9 represents the step in which said server sends a positive or negative response to said POS at the service provider
A10 represents the step in which said POS confirms or rejects said transaction request
B1 represents the step in which said user enters his/her username and PIN on his/her mobile device, selects said transaction and said mobile device will further extract the random key stored against said transaction
B2 represents the step in which said mobile device uses said modifier code to generate said secure key by using said random key and further displays said generated secure key as an electronic readable image
B3 represents the step in which said image is scanned and read to be used by the POS at the service provider
B4 represents the step in which the POS at the service provider sends ID information and said secure key to said server
B5 represents the step in which said server validates said POS ID and said secure key, calculates amount based on time and further checks the user's account details B6 represents the step in which said server sends a positive or negative response to the POS at the service provider
B7 represents the step in which said POS at the service provider confirms or rejects said transaction request.

### Example of a contractual transaction

A user using a system according to the present invention sets up a set of restrictions on his mobile device like for example an amount limit for one transaction.

A service provider using a system according to the present invention sets up a set of rules for calculating a cost for a service as a function of time.

Said user enters in the premises of said service provider and accesses his account by inputting his username and modifier on his mobile phone and sending them to the server. Said server further generates a random key and sends it back to the mobile device which will further generate the secure key and display it as an electronic readable image to the POS system at the service provider.

The POS comprises means for scanning/reading said secure key and sending the secure key, POS ID code and value of said transaction to said server.

If said secure key is correct against said transaction and if said POS ID code is registered on said server, said server will further check if said amount of the transaction meets the restriction set-up in said account by the user. In case the outcome of said check is positive, the server will block the amount from the user's account, will start a time counter and will also start calculating the amount needed for said service as a function of time. The amount calculated is further compared with the amount paid within said transaction. Once the amount paid is reached said service provider and said user are notified and can send a further transaction request to said server. If said transaction is not paid within a period of time, said service will not be functional or said user will have the rest of the calculated amount blocked on his account until said further transaction is approved.

If such a transaction is being used for example as an entry in a certain location or as a ticket, wherein said value will not be exceeded in the time limit, said transaction will remain valid and visible until the end of stay or said user can send to said server information on completing the transaction.

### Example of a secure access

A person wanting to access a certain location having security access restrictions like for example: a company building, a museum, a hospital or the like enters in the premises of said location and accesses his account on a personal electronic device or on an electronic device in the premises of said location. In case he/she does not have an account set-up he/she can create one, as explained in the present paper.

Said location can have different predefined restrictions set-up like for example: different locations within the premises that can be accessed (different areas, different buildings, different floors, different rooms), different time periods in which such an access can be used, different days of the week, different restrictions for different users, and the like.

Once said person will request access, he/she will use his/her username and password to communicate with said server and further send a secure key, like explained in the previous embodiments. After authenticating said user and said location, the server will start a transaction and at a same time can further start a timer. The user will be able to use the secure key displayed as an electronic readable image according to time restrictions (after said predetermined time interval, said secure key would not work anymore) and/or location restrictions, if said restrictions have been set-up.

Once said person will try to leave the premises of said location he can be asked to complete said transaction for security purposes or said transaction will be completed automatically after said time interval has lapsed.

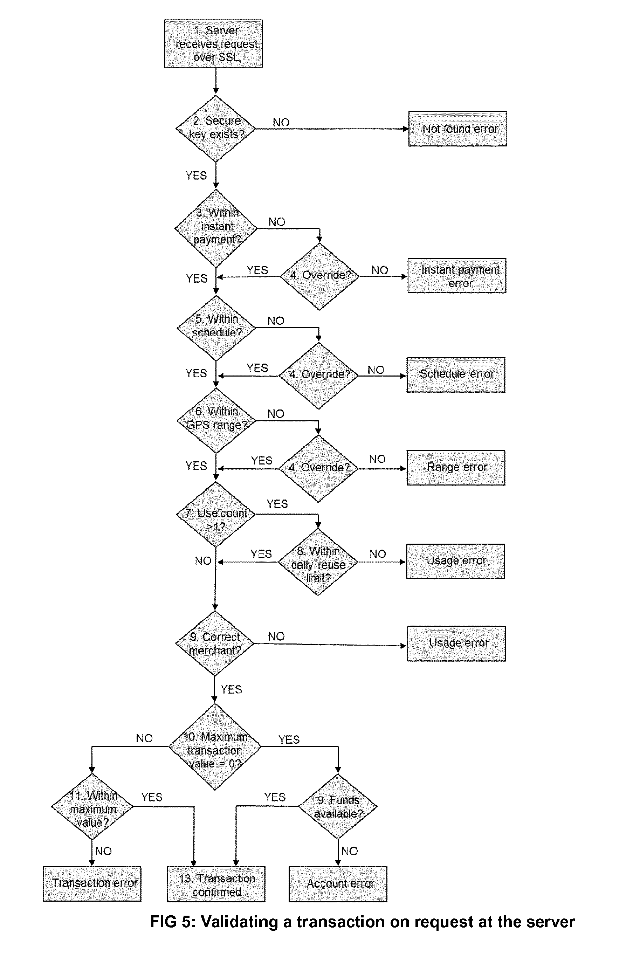

### Example of validating a transaction on request at a server (FIG 5)

A user using a system according to the present invention enters in the premises of a service provider and provides the random key or the secure key to the POS system of the service provider for validating a financial transaction.

Said POS system will read said random key or secure key and will send it together with the POS ID code and the amount of said financial transaction to the server through a secure internet connection that can use for example: Secure Sockets Layer (SSL) protocols, Transport Layer Security (TLS) protocols.

The server will check if said transaction exists within the transaction table and it is able to determine if said user has sent said random key or said secure key for approving said transaction. Further said server will check if the amount of the transaction does not exceed the amount limit set on the account. If said restrictions are not met and said user sent said random key, said server will further block any further transactions on the user account and will alert said user.

Further, said server will check if said POS device identity already exists within its database and will further check if said GPS coordinates are within the user defined radius, in case such a restriction has been defined by said user.

In case of any other restrictions have been set-up by said user, said server will check if said transaction meets them. In case the outcome of said check is not positive, said server will block any further transactions on said user account.

In case the outcome of said check is positive, said server will further check the balance of said user account. In case the amount of said financial transaction can be covered, said server will block said amount and will send a message of approval of said transaction to said POS system. In case the amount of said financial transaction cannot be covered, said server will send a message of refusal of transaction to said POS system.

## Claims

1. A method for approving a transaction comprising:
- inputting a user-name and a password corresponding to a user account
- generating a random key
- generating a secure key
**Characterized in that** the step of generating the secure key is based on the password and the random key.

2. A method of approving a transaction as per claim 1 further comprising generating a modifier code based on said password.

3. A method of approving a transaction as per claim 2 wherein the secure key is generated based on the modifier code and the random key.

4. A method of approving the transaction as per claims 2 or 3 wherein the modifier code is generated by a first electronic device and sent over a network to a server for identifying the user account.

5. A method for approving a transaction as per claim 4 wherein the first electronic device and/or the server can generate the secure key.

6. A method for approving a transaction as per claim 5 wherein said server compares the secure key received from the electronic device against a transaction table stored on said server.

7. A method for approving a transaction as per claims 4 to 6 wherein said first electronic device displays said secure key and/or said random key as an electronic readable image.

8. A method for approving a transaction as per any of the previous claims comprising a second electronic device comprising:
- Reading the displayed secure key and/or random key
- Sending said secure key and/or random key and electronic device identity information to said server

9. A method for approving a transaction as per claims 4 to 8 wherein said server identifies if a received key is generated based on said password.

10. A method for approving a transaction as per claims 8 or 9 wherein the second electronic device confirms or rejects said transaction.

11. A system for approving a transaction comprising:
- Means for inputting a user-name and a password corresponding to a user account
- Means for generating a random key
- Means for generating a secure key
**Characterized in that** said means for generating the secure key further comprises means for combining the password and the random key.

12. A system for approving a transaction as per claim 11 further comprising means for generating a modifier code based on said password.

13. A system for approving a transaction as per claim 11 wherein the secure key is generated based on the modifier code and the random key.

14. A system for approving the transaction as per claims 12 or 13wherein the modifier code is generated by a first electronic device and sent over a network to a server.

15. A system for approving a transaction as per claim 14 wherein said first electronic device and/or said server further comprise means for generating said secure key.
